(19) Europäisches Patentamt
European Patent Office
Office européen des brevets

(11) **EP 2 650 044 A1**

(12) **EUROPEAN PATENT APPLICATION**
published in accordance with Art. 153(4) EPC

(43) Date of publication:
**16.10.2013 Bulletin 2013/42**

(51) Int Cl.:
**B01D 69/12** (2006.01)     **B01D 71/26** (2006.01)
**B01D 71/70** (2006.01)     **C08G 77/442** (2006.01)

(21) Application number: **11846467.6**

(22) Date of filing: **05.12.2011**

(86) International application number:
**PCT/JP2011/078037**

(87) International publication number:
**WO 2012/077619 (14.06.2012 Gazette 2012/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2010 JP 2010272212**

(71) Applicant: **Toray Industries, Inc.
Tokyo 103-8666 (JP)**

(72) Inventors:
• **MINEHARA, Hiroki
Shiga 520 8558 (JP)**
• **NAKATSUJI, Koji
Shiga 520 8558 (JP)**
• **TOMIOKA, Hiroki
Shiga 520 8558 (JP)**

(74) Representative: **Hager, Thomas Johannes
Hoefer & Partner
Patentanwälte
Pilgersheimer Strasse 20
81543 München (DE)**

(54) **COMPOSITE SEMIPERMEABLE MEMBRANE AND METHOD FOR PRODUCING SAME**

(57)     Provided is a composite semipermeable membrane comprising a microporous support membrane and a separation functional layer formed thereon, wherein the separation functional layer is formed from Compound (A) in which a reactive group(s) having an ethylenically unsaturated group and a hydrolyzable group(s) are bonded directly to a silicon atom, Compound (B) having an ethylenically unsaturated group, the Compound (B) being different from said Compound (A), and Compound (C) having an ethylenically unsaturated group, the Compound (C) being different from said Compound (A) and (B), by condensation of hydrolyzable groups that the Compound (A) has and polymerization of ethylenically unsaturated groups that the Compound (A), the Compound (B), and the Compound (C) have, and the Compound (A), the Compound (B), and the Compound (C) satisfy the relationship of the following equation (I):

$$|Q_A - Q_C| + |Q_B - Q_C| = |Q_A - Q_B| \qquad (I)$$

(Qx represents an Alfrey-Price Q value of Compound X).

A composite semipermeable membrane having excellent chemical resistivity to chemicals represented by chlorine, separation performance, and water permeability can be provided.

EP 2 650 044 A1

**Description**

TECHNICAL FIELD

The present invention relates to a composite semipermeable membrane having excellent durability and water permeability and a process for producing the same.

BACKGROUND ART

Conventionally, there was an asymmetric cellulose acetate membrane as a semipermeable membrane used as a separation membrane for water treatment that resists permeation of dissolved components such as salts (e.g., Patent Document 1) . However, this membrane had low hydrolysis resistance and microorganism resistance, and further, basic performances of a separation membrane for water treatment such as salt rejection rate and water permeability were not sufficient. For this reason, the asymmetric cellulose acetate membrane has been used in a few applications but has not been put to practical use in a wide range of applications.

To compensate for the defects of the asymmetric membrane, as a semipermeable membrane in a form different from that of the asymmetric membrane, a composite semipermeable membrane obtained by providing a different material on a microporous support membrane, which material substantially serves as a separation functional layer that provides membrane separation performance, was proposed. In a composite semipermeable membrane, it is possible to select the best material for each of the microporous support membrane and separation functional layer, and also for a membrane-forming technique, it is possible to select various methods. In most of the composite semipermeable membranes that have been commercially available, a separation functional layer comprising polyamide is obtained by interfacial polycondensation on a porous membrane support membrane. Examples of such a composite semipermeable membrane include the invention described in Patent Document 2. Further, Patent Document 3 discloses a separation functional membrane layer comprising a compound having an alkoxy group in a polyamide structure. The composite semipermeable membranes described above have provided desalination performance higher than that of the cellulose acetate asymmetric membrane and, at the same time, provided high water permeability. However, it is known that such composite semipermeable membranes using polyamide still have insufficient resistance to oxidizing agents because of having an amide bond in their main chain, and their desalination performance and selective separation performance are significantly deteriorated by treating with chlorine, hydrogen peroxide, or the like used for membrane sterilization.

PRIOR ART DOCUMENTS

PATENT DOCUMENTS

As an example of the improvement of resistance to oxidizing agents, for example, Patent Document 4, Patent Document 5, and Patent Document 6 disclose a separation functional layer obtained by polymerization of ethylenically unsaturated compounds that provides a highly versatile membrane-forming technique and wide material selectivity.

Patent Document 1: U.S. Patent No. 3,133,132
Patent Document 2: U.S. Patent No. 4,277,344
Patent Document 3: JP 09-99228 A
Patent Document 4: JP 2000-117077 A
Patent Document 5: JP 2004-17002 A
Patent Document 6: WO 2010-029985

SUMMARY OF THE INVENTION

PROBLEMS TO BE SOLVED BY THE INVENTION

The composite semipermeable membranes having a separation functional layer obtained by polymerization of ethylenically unsaturated compounds described in Patent Document 4, Patent Document 5, and Patent Document 6 have excellent chemical resistivity, but either of the water permeability or separation performance was not sufficient.

Thus, an object of the present invention is to provide a composite semipermeable membrane that has high durability and satisfies high separation properties and high water permeability.

MEANS FOR SOLVING THE PROBLEMS

To solve the problems described above, the composite semipermeable membrane of the present invention has a constitution below:

a composite semipermeable membrane comprising a microporous support membrane and a separation functional layer formed thereon, wherein the separation functional layer is formed from Compound (A) in which a reactive group(s) having an ethylenically unsaturated group and a hydrolyzable group(s) are bonded directly to a silicon atom, Compound (B) having an ethylenically unsaturated group, the Compound (B) being different from the Compound (A) and Compound (C) having an ethylenically unsaturated group, the Compound (C) being different from the Compounds (A) and (B), by condensation of hydrolyzable groups that the Compound (A) has and polymerization of ethylenically unsaturated groups that the Compound (A), the Compound (B) and the Compound (C) have, and the Compound (A), the Compound (B) and the Compound (C) satisfy the relationship of the following equation (I) regarding an Alfrey-Price Q value which is an index of copolymerizability of a monomer.

$$|Q_A - Q_C| + |Q_B - Q_C| = |Q_A - Q_B| \qquad (I)$$

($Q_X$ represents an Alfrey- Price Q value of Compound X) .
Further, the process for producing the composite semipermeable membrane of the present invention has a constitution below:
A process for producing a composite semipermeable membrane, comprising applying Compound (A) in which a reactive group (s) having an ethylenically unsaturated group and a hydrolyzable group (s) are bonded directly to a silicon atom, Compound (B) having an ethylenically unsaturated group, the Compound (B) being different from the Compound (A), and Compound (C) having an ethylenically unsaturated group, the Compound (C) being different from the Compounds (A) and (B) onto a microporous support membrane, and forming a separation functional layer by condensation of hydrolyzable groups that the Compound (A) has and polymerization of ethylenically unsaturated groups that the Compound (A), the Compound (B) and the Compound (C) have, wherein the Compound (A), the Compound (B) and the Compound (C) satisfy the relationship of the following equation (I) .
$$|Q_A - Q_C| + |Q_B - Q_C| = |Q_A - Q_B| \qquad (I)$$

($Q_X$ represents an Alfrey- Price Q value of Compound X) .
In the composite semipermeable membrane of the present invention, Compound (B) preferably has an acidic group.
In the composite semipermeable membrane of the present invention, it is preferred that Compound (C) be a compound having an ethylenically unsaturated group and that Compound (A) and Compound (C) be both conjugated monomers or both unconjugated monomers.
In the composite semipermeable membrane of the present invention, it is preferred that Compound (C) be a compound in which an ethylenically unsaturated group(s) and a hydrolyzable group(s) are bonded directly to a silicon atom and that Compound (B) and Compound (C) be both conjugated monomers or both unconjugated monomers.
In the composite semipermeable membrane of the present invention, it is preferred that Compound (C) have a silicon atom and that a hydrolyzable group(s) be bonded directly to the silicon atom.
In the composite semipermeable membrane of the present invention, Compound (A) is preferably represented by the following chemical formula (i).
$$Si\,(R^1)_m\,(R^2)_n\,(R^3)_{4-m-n} \qquad (i)$$

($R^1$ represents a reactive group containing an ethylenically unsaturated group; $R^2$ represents alkoxy, alkenyloxy, carboxyl, ketoxime, a halogen atom or isocyanate; $R^3$ represents a hydrogen atom or alkyl; m and n are integers that satisfy $m + n \leq 4$, provided that $m \geq 1$ and $n \geq 1$ are satisfied; and in each of $R^1$, $R^2$ and $R^3$, when two or more functional groups are bonded to a silicon atom, the functional groups may be the same or different) .
In the composite semipermeable membrane of the present invention, Compound (C) is preferably represented by the following chemical formula (ii) .
$$Si (R^1)_m (R^2)_n (R^3)_{4-m-n} \qquad (ii)$$

($R^1$ represents a reactive group containing an ethylenically unsaturated group; $R^2$ represents alkoxy, alkenyloxy, carboxyl, ketoxime, a halogen atom or isocyanate; $R^3$ represents a hydrogen atom or alkyl; m and n are integers that satisfy m + n ≤ 4, provided that m ≥ 1 and n ≥ 1 are satisfied; and in each of $R^1$, $R^2$ and $R^3$, when two or more functional groups are bonded to a silicon atom, the functional groups may be the same or different) .

## EFFECTS OF THE INVENTION

The present invention provides a composite semipermeable membrane having excellent chemical resistivity to chemicals represented by chlorine and excellent water permeability. By using this membrane, industrial improvements such as reduced running costs, reduced costs, and saving of energy can be expected.

## BEST MODE FOR CARRYING OUT THE INVENTION

The separation functional layer of the composite semipermeable membrane of the present invention is formed on a microporous support membrane by the following reaction.

Namely, it is a separation functional layer formed from Compound (A) in which a reactive group (s) having an ethylenically unsaturated group and a hydrolyzable group (s) are bonded directly to a silicon atom, Compound (B) having an ethylenically unsaturated group, the Compound (B) being different from Compound (A), and Compound (C) having an ethylenically unsaturated group, the Compound (C) being different from the Compounds (A) and (B), by condensation of hydrolyzable groups that the Compound (A) has and polymerization of ethylenically unsaturated groups that the Compound (A), the Compound (B) and the Compound (C) have.

First, Compound (A) in the present invention, which is a compound in which a reactive group (s) having an ethylenically unsaturated group and a hydrolyzable group (s) are bonded directly to a silicon atom, will be described.

The reactive group having an ethylenically unsaturated group is bonded directly to a silicon atom. Examples of the reactive group include vinyl, allyl, methacryloxyethyl, methacryloxypropyl, acryloxyethyl, acryloxypropyl, and styryl. From the standpoint of polymerizability, methacryloxypropyl, acryloxypropyl and styryl are preferred.

Through processes such as a change of a hydrolyzable group bonded directly to a silicon atom to a hydroxyl group, a condensation reaction takes place, in which compounds are bonded to each other by siloxane bond, to give a polymer. Examples of the hydrolyzable group include alkoxy, alkenyloxy, carboxyl, ketoxime, aminohydroxyl, a halogen atom and isocyanate. The alkoxy group is preferably $C_1$-$C_{10}$ alkoxy and more preferably $C_1$-$C_2$ alkoxy. The alkenyloxy group is preferably $C_2$-$C_{10}$ alkenyloxy, more preferably $C_2$-$C_4$ alkenyloxy, and still more preferably $C_3$ alkenyloxy. The carboxyl group is preferably $C_2$-$C_{10}$ carboxyl, and more preferably $C_2$ carboxyl, i.e., acetoxy. Examples of the ketoxime group include methyl ethyl ketoxime, dimethyl ketoxime and diethyl ketoxime. Aminohydroxyl group is a group in which an amino group is bonded through oxygen to a silicon atom through an oxygen atom. Examples thereof include dimethyl aminohydroxyl, diethyl aminohydroxyl and methyl ethyl aminohydroxyl. As a halogen atom, a chlorine atom is preferably employed.

In forming a separation functional layer, a compound having a silanol structure as a result of hydrolysis of some of the hydrolyzable groups described above can also be used. Further, two or more compounds that have undergone an increase in molecular weight to the extent that some of the hydrolyzable groups are hydrolyzed, condensed, but not cross-linked can also be used.

Compound (A) is preferably represented by the following chemical formula (i).

$$Si (R^1)_m (R^2)_n (R^3)_{4-m-n} \qquad (i)$$

($R^1$ represents a reactive group containing an ethylenically unsaturated group; $R^2$ represents alkoxy, alkenyloxy, carboxyl, ketoxime, a halogen atom or isocyanate; $R^3$ represents H or alkyl; m and n are integers that satisfy m + n ≤ 4, provided that m ≥ 1 and n ≥ 1 are satisfied; and in each of $R^1$, $R^2$ and $R^3$, when two or more functional groups are bonded to a silicon atom, the functional groups may be the same or different) .

$R^1$ is a reactive group containing an ethylenically unsaturated group as described above.

$R^2$ is a hydrolyzable group as described above. The carbon number of the alkyl of $R^3$ is preferably 1 to 10, and more preferably 1 to 2.

As the hydrolyzable group, alkoxy is preferably used because it provides a reaction solution with viscosity in forming a separation functional layer.

Examples of such compounds include vinyltrimethoxysilane, vinyltriethoxysilane, allyltrimethoxysilane, allyltriethoxysilane, styryltrimethoxysilane, styryltriethoxysilane, styrylethyltrimethoxysilane, styrylethyltriethoxysilane, methacryloxypropylmethyldimethoxysilane, methacryloxypropyltrimethoxysilane, methacryloxypropylmethyldiethoxysilane, methacryloxypropyltriethoxysilane, acryloxymethyltrimethoxysilane, acryloxypropyltrimethoxysilane and (acryloxymethyl)phenethyltrimethoxysilane.

In addition to Compound (A), a compound that does not have a reactive group having an ethylenically unsaturated group but has a hydrolyzable group(s) can also be used in combination. Such a compound can be represented by the following chemical formula (iii), and examples thereof include tetramethoxysilane, tetraethoxysilane, methyltrimethoxysilane and methyltriethoxysilane.

$$Si\ (R^1)_m\ (R^2)_{4-m} \qquad (iii)$$

($R^1$ represents alkoxy, alkenyloxy, carboxyl, ketoxime, a halogen atom or isocyanate; $R^2$ represents a hydrogen atom or alkyl, provide that m is an integer that satisfies $1 \leq m \leq 4$; and in each of $R^1$ and $R^2$, when two or more functional groups are bonded to a silicon atom, the functional groups may be the same or different) .

Compound (B) in the present invention, which is different from Compound (A) and is a compound having an ethylenically unsaturated group, will now be described.

The ethylenically unsaturated group is addition-polymerizable. Examples of such compounds include ethylene, propylene, methacrylic acid, acrylic acid, styrene and derivatives thereof.

Compound (B) is preferably an alkali-soluble compound having an acidic group in order to enhance selective permeability of water and increase a salt rejection rate when a composite semipermeable membrane is used, for example, for separation of an aqueous solution.

Preferred acids are carboxylic acid, phosphonic acid, phosphoric acid and sulfonic acid, and for the structure of these acids, they may exist in any state of the form of an acid, an ester compound and a metal salt. Compound (B) having such an ethylenically unsaturated group can contain two or more acidic groups, and, in particular, a compound containing 1 to 2 acidic groups is preferred.

Examples of the compound having a carboxylic acid group among the above- described compounds (B) having an ethylenically unsaturated group include maleic acid, maleic anhydride, acrylic acid, methacrylic acid, 2- (hydroxymethyl) acrylic acid, 4- (meth) acryloyloxyethyl trimellitic acid and corresponding anhydrides, 10- methacryloyloxydecyl malonic acid, N- (2- hydroxy- 3- methacryloyloxypropyl)- N- phenylglycine and 4- vinylbenzoic acid.

Among the Compound (B) having an ethylenically unsaturated group described above, examples of the compound having a phosphonic acid group include vinyl phosphonic acid, 4- vinylphenyl phosphonic acid, 4- vinylbenzyl phosphonic acid, 2- methacryloyloxyethyl phosphonic acid, 2- methacrylamidoethyl phosphonic acid, 4- methacrylamide- 4- methyl- phenyl- phosphonic acid, 2- [4- (dihydroxyphosphoryl)- 2- oxa- butyl]- acrylic acid and 2- [2- dihydroxyphosphoryl)- ethoxymethyl]- acrylic acid- 2, 4, 6- trimethyl- phenyl ester.

Among the Compound (B) having an ethylenically unsaturated group described above, examples of the phosphate ester compound include 2- methacryloyloxypropyl monohydrogen phosphate and 2- methacryloyloxypropyl dihydrogen phosphate, 2- methacryloyloxyethyl monohydrogen phosphate and 2- methacryloyloxyethyl dihydrogen phosphate, 2- methacryloyloxyethyl- phenyl- hydrogen phosphate, dipentaerythritol- pentamethacryloyloxy phosphate, 10- methacryloyloxydecyl- dihydrogen phosphate, dipentaerythritol pentamethacryloyloxy phosphate, phosphoric acid mono- (1- acryloyl- piperidin- 4- yl)- ester, 6- (methacrylamide) hexyl dihydrogen phosphate and 1, 3- bis- (N- acryloyl- N- propyl- amino)- propan- 2- yl- dihydrogen phosphate.

Among the Compound (B) having an ethylenically unsaturated group described above, examples of the compound having a sulfonic group include vinyl sulfonic acid, allyl sulfonic acid, 3- (acryloyloxy) propane- 1- sulfonic acid, 3- (methacryloyloxy) propane- 1- sulfonic acid, 4- methacrylamide benzene sulfonic acid, 1, 3- butadiene- 1- sulfonic acid, 2- methyl- 1, 3- butadiene- 1- sulfonic acid, 4- vinylphenyl sulfonic acid, 3- (methacrylamide) propyl sulfonic acid and salts thereof.

Compound (C) in the present invention, which is different from Compounds (A) and (B) and is a compound having an ethylenically unsaturated group, and further, the equation (I) that Compound (A), Compound (B) and Compound (C) satisfy will now be described.

$$|Q_A - Q_C| + |Q_B - Q_C| = |Q_A - Q_B| \qquad (I)$$

(Qx represents an Alfrey- Price Q value of Compound X) .

Examples of Compound (C) include the following compounds: i.e., ethylene, propylene, methacrylic acid, acrylic acid, styrene and derivatives thereof, maleic acid, maleic anhydride, acrylic acid, methacrylic acid, 2- (hydroxymethyl) acrylic acid, 4- (meth) acryloyloxyethyl trimellitic acid and corresponding anhydrides, 10- methacryloyloxydecyl malonic acid, N- (2- hydroxy- 3- methacryloyloxypropyl)- N- phenylglycine and 4- vinylbenzoic acid, vinyl phosphonic acid, 4- vinylphenyl phosphonic acid, 4- vinylbenzyl phosphonic acid, 2- methacryloyloxyethyl phosphonic acid, 2- methacrylamidoethyl phosphonic acid, 4- methacrylamide- 4- methyl- phenyl- phosphonic acid, 2- [4- (dihydroxyphosphoryl)- 2- oxa- butyl]- acrylic acid and 2- [2- dihydroxyphosphoryl)- ethoxymethyl]- acrylic acid- 2, 4, 6- trimethylphenyl ester, 2- methacryloyloxypropyl monohydrogen phosphate and 2- methacryloyloxypropyl dihydrogen phosphate, 2- methacryloyloxyethyl monohydrogen phosphate and 2- methacryloyloxyethyl dihydrogen phosphate, 2- methacryloyloxyethyl- phenyl monohydrogen phosphate, dipentaerythritol- pentamethacryloyloxy phosphate, 10- methacryloyloxydecyl- dihydrogen phosphate, dipentaerythritolpentamethacryloyloxy phosphate, phosphoric acid mono- (1- acryloyl- piperidin- 4- yl)- ester, 6- (methacrylamide) hexyl dihydrogen phosphate and 1, 3- bis- (N- acryloyl- N- propyl- amino)- propan- 2- yl- dihydrogen phosphate, vinyl sulfonic acid, allyl sulfonic acid, 3- (acryloyloxy) propane- 1- sulfonic acid, 3- (methacryloyloxy) propane- 1- sulfonic acid, 4- methacrylamide benzene sulfonic acid, 1, 3- butadiene- 1- sulfonic acid, 2- methyl- 1, 3- butadiene- 1- sulfonic acid, 4- vinylphenyl sulfonic acid, 3- (methacrylamide) propyl sulfonic acid, ethylene diacrylate, 1, 3- bis (acryloyloxy) propane, 1, 4- bis (acryloyloxy) butane, 1, 5- bis (acryloyloxy) pentane, 1, 6- bis (acryloyloxy) hexane, 1, 7- bis (acryloyloxy) heptane, 1, 8- bis (acryloyloxy) octane, 1, 9- bis (acryloyloxy) nonane, 1, 10- bis (acryloyloxy) decane, ethylene glycol diacrylate, diethylene glycol diacrylate, triethylene glycol diacrylate, tetraethylene glycol diacrylate, propylene glycol diacrylate, dipropylene glycol diacrylate, neopentyl glycol diacrylate, glycerol diacrylate, N, N'- methylenebisacrylamide, N, N'- (1, 2- dihydroxyethylene) bisacrylamide, diethyl 1, 4- phenylenediacrylate, bisphenol A diacr- rylate, ethylene dimethacrylate, 1, 3- bis (methacryloyloxy) propane, 1, 4- bis (methacryloyloxy) butane, 1, 5- bis (methacryloyloxy) pentane, 1, 6- bis (methacryloyloxy) hexane, 1, 7- bis (methacryloyloxy) heptane, 1, 8- bis (methacryloyloxy) octane, 1, 9- bis (methacryloyloxy) nonane, 1, 10- bis (methacryloyloxy) decane, ethylene glycol dimethacrylate, diethylene glycol dimethacrylate, triethylene glycol dimethacrylate, tetraethylene glycol dimethacrylate, propylene glycol dimethacrylate, dipropylene glycol dimethacrylate, neopentyl glycol dimethacrylate, glycerol dimethacrylate, N, N'- methylene bismethacrylamide, N, N'- (1, 2- dihydroxyethylene) bismethacrylamide, diethyl 1, 4- phenylene dimethacrylate, bisphenol A dimethacrylate, divinyl oxalate, divinyl malonate, divinyl succinate, divinyl glutarate, divinyl adipate, divinyl pimelate, divinyl suberate, divinyl azelate, divinyl sebacate, divinyl phthalate, divinyl isophthalate, divinyl maleate, divinyl terephthalate, divinylbenzene, 1, 5- hexadiene- 3, 4- diol, diallyl ether, diallyl sulfide, diallyl disulfide, diallylamine, diallyl oxalate, diallyl malonate, diallyl succinate, diallyl glutarate, diallyl adipate, diallyl pimelate, diallyl suberate, diallyl azelate, diallyl sebacate, diallyl phthalate, diallyl isophthalate, diallyl maleate, diallyl terephthalate, diallyldimethylsilane, diallyldiphenylsilane, 1, 3- diallyloxy- 2- propanol, diallyl propyl isocyanurate, diallyl 1, 4- cyclohexanedicarboxylate, bisphenol A diallyl ether, N, N'- diallyltartardiamide, tris (2- acryloyloxyethyl) cyanurate, tris (2- acryloyloxyethyl) isocyanurate, 1, 3, 5- triacryloyltriazine, 1, 3, 5- triacryloylhexahydro- 1, 3, 5- triazine, trimethylolpropane triacrylate, gallic acid triacrylate, pentaerythritol triacrylate, pyrogallol triacrylate, tris (2- methacryloyloxyethyl) cyanurate, tris (2- methacryloyloxyethyl) isocyanurate, 1, 3, 5- trimethacryloyltriazine, 1, 3, 5- trimethacryloyl hexahydro- 1, 3, 5- triazine, trimethylolpropane trimethacrylate, gallic acid trimethacrylate, pentaerythritol trimethacrylate, 2, 4, 6- trivinylboroxin, 2, 4, 6- trimethyl- 2, 4, 6- trivinylcyclotrisilazane, 1, 2, 4- trivinylcyclohexane, pentaerythritol tetraacrylate, pentaerythritol tetramethacrylate, pyrogallol triacrylate, 2, 4, 6, 8- tetramethyl- 2, 4, 6, 8- tetravinylcyclotetrasiloxane, dipentaerythritol hexaacrylate, dipentaerythritol hexamethacrylate, vinyltrimethoxysilane, vinyltriethoxysilane, allyltrimethoxysilane, allyltriethoxysilane, sty- ryltrimethoxysilane, styryltriethoxysilane, styrylethyltrimethoxysilane, styrylethyltriethoxysilane, methacryloxypropyl- methyldimethoxysilane, methacryloxypropyltrimethoxysilane, methacryloxypropylmethyldiethoxysilane, methacryloxy- propyltriethoxysilane, acryloxymethyltrimethoxysilane, acryloxypropyltrimethoxysilane and (acryloxymethyl) phenethyltrimethoxysilane.

When Compound (C) satisfies the equation (I) above, copolymerization of Compound (A) and Compound (B) readily occurs, which produces the effect of moderately scattering cross-linking points due to condensation of hydrolyzable groups of Compound (A) to improve uniformity of pores. On the other hand, in place of Compound (C), when Compound (C) that does not satisfy the equation (I) is added to a copolymerization system of Compound (A) and Compound (B), copolymerizability of Compound (C) and Compound (A) or copolymerizability of Compound C and Compound B will be lower than the copolymerizability of Compound (A) and Compound (B). This is because, according to Q-e theory, monomers with a small difference in Q value are readily polymerized, and monomers with a large difference in Q value are not readily copolymerized. Consequently, the addition of Compound (C) cannot moderately scatter the cross-linking points derived from silicon atoms to which a hydrolyzable group, a crosslinkable functional group, is bonded directly in a membrane to improve uniformity of pores.

In the case where Compound (C), similarly to Compound (A), is a compound in which a reactive group(s) having an ethylenically unsaturated group and a hydrolyzable group(s) are bonded directly to a silicon atom, a compound charged in larger molar quantity is defined as Compound (A), and a compound charged in smaller molar quantity is defined as Compound (C). In the case where Compound (C) has a reactive group(s) having an ethylenically unsaturated group but is not a compound bonded directly to a silicon atom, a compound charged in small molar quantity compared to Compound (B) is defined as Compound (C). In contrast, a compound charged in larger molar quantity is defined as Compound (B).

The Alfrey-Price Q value used in the equation (I) has been presented by T. Alfrey and C. C. Price in 1948 as an index indicating the degree of double bond of radically polymerizable monomers and conjugation with their substituents together with e value which is an index of electron density of the double bond, and the values of a number of monomers have been experimentally determined using styrene as a standard (Q value = 1.0, e value = -0.8).

The Q values of typical monomers are shown in Table 1. The Q values of more monomers are collected, for example, in "Polymer Handbook" by J. Brandrup, E. H. Immergut, and E. A. Grulke, (U.S.A.), 4th edition, John Wiley & Sons Inc., 1999, p. II/181 to II/319, and reference can be made thereto.

[Table 1]

| Monomer | Alfrey-Price Q value |
|---|---|
| crotonaldehyde | 0.013 |
| ethylene | 0.016 |
| isobutene | 0.023 |
| Vinyl acetate | 0.026 |
| isobutylvinylether | 0.030 |
| tetrafluoroethylene | 0.032 |
| allyl alcohol | 0.052 |
| vinyl chloride | 0.056 |
| acrylamide | 0.23 |
| methyl acrylate | 0.45 |
| isopropyl acrylate | 0.48 |
| acrylonitrile | 0.48 |
| octyl acrylate | 0.63 |
| methyl methacrylate | 0.78 |
| acrylic acid | 0.83 |
| maleic acid anhydride | 0.86 |
| $\alpha$-methyl styrene | 0.97 |
| methacrylic acid | 0.98 |
| styrene | 1.0 |
| p-chrolostyrene | 1.33 |
| p-methoxystyrene | 1.53 |
| m-methylstyrene | 1.57 |
| acrolein | 1.08 |
| phenyl methacrylate | 1.17 |
| p-methylphenyl methacrylate | 1.23 |
| p-methoxylphenyl methacrylate | 1.30 |
| butadiene | 1.70 |
| isoprene | 1.99 |
| methyl $\alpha$-cyanoacrylate | 4.91 |

(continued)

| Monomer | Alfrey-Price Q value |
|---|---|
| chroloprene | 7.26 |
| vinylidene cyanide | 14.2 |

For a method of deriving the Q value, a monomer $M_1$ whose Q value is unknown is first polymerized with a monomer $M_2$ whose Q value and e value are known at various molar ratios ($F = [M_1] / [M_2]$), and a ratio of consumption of each monomer at an early stage of the polymerization ($f = d [M_1] /d [M_2]$) is calculated from measurement data obtained using gas chromatography or the like. The F and f are known to satisfy the relationship of the equation (II), and copolymerization reactivity ratios $r_1$ and $r_2$ can be determined from the values of slope and ordinate intercept obtained by plotting F (f- 1) /f against $F^2$/f and performing a linear fit.
$$F(f - 1)/f = r_1 F^2/f - r_2 \quad (II)$$

The Q value ($Q_1$) of the monomer $M_1$ can be derived by fitting the copolymerization reactivity ratios $r_1$ and $r_2$ and the Q value and e value of the monomer $M_2$ ($Q_2$ and $e_2$) to the equation (III) and equation (IV) presented by T. Alfrey and C. C. Price.
$$r_1 = (Q_1/Q_2)\exp[-e_1(e_1 - e_2)] \quad (III)$$

$$r_2 = (Q_2/Q_1)\exp[-e_2(e_2 - e_1)] \quad (IV)$$

The method can be understood in detail by referring to Document 1 (M. Fineman et al., Journal of Polymer Science, Vol.5, p.269, John Wiley & Sons Inc., 1950) and Document 2 (Revised Chemistry of Polymer Synthesis, p.111 to 116, written by Ohtsu Takayuki, Kagaku-Dojin Publishing Co., Inc., 1992).
In general, in copolymerization between monomers having greatly different Q values, it is highly likely that the monomer having a large Q value and the monomer having a small Q value are homopolymerized separately, and, therefore, copolymerization reactivity with each other tends to be extremely poor. Monomers having a Q value of 0.2 or more are commonly called a conjugated monomer, and monomers having a Q value of less than 0.2 are commonly called an unconjugated monomer. A conjugated monomer and a conjugated monomer, and an unconjugated monomer and an unconjugated monomer are readily copolymerized.
In the composite semipermeable membrane of the present invention, to form a separation functional layer, a reaction solution containing a polymerization initiator is used in addition to Compound (A), Compound (B) and Compound (C). It is necessary to apply this reaction solution onto a microporous support membrane, further condense hydrolyzable groups, and besides polymerize ethylenically unsaturated groups to thereby increase the molecular weight of these Compounds.
When Compound (A) is condensed and polymerized without the coexistence of Compound (B) and Compound (C), there will be too many cross-linking points due to condensation of hydrolyzable groups, and, therefore, there is a tendency toward too small a pore size and low water permeability. On the other hand, when Compound (B) is copolymerized in addition to the increase in molecular weight and cross-linking of Compound (A), cross-linking points due to condensation of hydrolyzable groups are moderately scattered. Such a moderate scattering of the cross-linking points forms a separation functional layer having a moderate pore size, and a composite semipermeable membrane having well-balanced water permeation performance and rejection performance can be obtained. When a composite semipermeable membrane is produced, Compound (B) having an ethylenically unsaturated group, if its molecular weight is low, can dissolve out and cause membrane performance degradation in the use of the composite semipermeable membrane, and thus the molecular weight needs to be increased.
Examples of the method of improving uniformity of the pore size in the separation functional layer include the method of improving copolymerizability. To a system in which Compound (A) and Compound (B) exist, Compound (C) having a Q value between the Q value of the Compound (A) and the Q value of the Compound (B) is added, thereby facilitating copolymerization of Compound (A), Compound (B) and Compound (C). Namely, adding Compound (C) that satisfies the relationship of the following equation (I) facilitates copolymerization of Compound (A) having a hydrolyzable group(s) with other components, and cross-linking points due to condensation of hydrolyzable groups are moderately scattered, forming a separation functional layer having a uniform pore size. As a result, a composite semipermeable membrane having well-balanced water permeation performance and rejection performance can be obtained.

$$|Q_A - Q_C| + |Q_B - Q_C| = |Q_A - Q_B| \qquad (I)$$

($Q_X$ represents an Alfrey- Price Q value of Compound X) .

When Compound (C) is a compound having an ethylenically unsaturated group, and a hydrolyzable group does not have a functional group bonded directly to a silicon atom, if Compound (A) and Compound (C) are both conjugated monomers or both unconjugated monomers, copolymerization readily occurs because of near Q values, and consequently, cross- linking points due to condensation of hydrolyzable groups that the Compound (A) has are moderately scattered, producing a great effect of improving uniformity of pores.

When Compound (C), similarly to Compound (A), is a compound in which a reactive group(s) having an ethylenically unsaturated group and a hydrolyzable group(s) are bonded directly to a silicon atom, if Compound (C) and Compound (B) are both conjugated monomers or both unconjugated monomers, copolymerization readily occurs because of near Q values, and consequently, cross-linking points due to condensation of hydrolyzable groups that the Compound (C) has are moderately scattered, producing a great effect of improving uniformity of pores.

In the method exemplified for separation functional layer formation, the step of applying a reaction solution containing Compound (A), Compound (B) and Compound (C), the step of removing a solvent, the step of polymerizing ethylenically unsaturated groups, and the step of condensing hydrolyzable groups are performed in the order mentioned. In the step of polymerizing ethylenically unsaturated groups, condensation of hydrolyzable groups may occur at the same time.

First, a reaction solution containing Compound (A), Compound (B) and Compound (C) is brought into contact with a microporous support membrane. Such a reaction solution is generally a solution containing a solvent, and such a solvent is not particularly limited as long as it does not break the microporous support membrane and dissolves Compound (A), Compound (B), Compound (C) and polymerization initiators added as required. To the reaction solution, it is preferable to add water of 1 to 10 times molar quantity and preferably 1 to 5 times molar quantity relative to the total molar number of Compound (A) and Compound (C) together with an inorganic acid or an organic acid to promote hydrolysis of Compound (A) .

As a solvent in the reaction solution, water, alcohol- based organic solvents, ether- based organic solvents, ketone- based organic solvents and mixtures thereof are preferred. Examples of alcohol- based organic solvents include methanol, ethoxymethanol, ethanol, propanol, butanol, amyl alcohol, cyclohexanol, methylcyclohexanol, ethylene glycol monomethyl ether (2- methoxyethanol), ethylene glycol monoaceto ester, diethylene glycol monomethyl ether, diethylene glycol monoacetate, propylene glycol monoethyl ether, propylene glycol monoacetate, dipropylene glycol monoethyl ether, methoxybutanol and the like. Examples of ether- based organic solvents include methylal, diethyl ether, dipropyl ether, dibutyl ether, diamyl ether, diethyl acetal, dihexyl ether, trioxane and dioxane. Examples of ketone- based organic solvents include acetone, methyl ethyl ketone, methyl propyl ketone, methyl isobutyl ketone, methyl amyl ketone, methyl cyclohexyl ketone, diethyl ketone, ethyl butyl ketone, trimethylnonanone, acetonitrile acetone, dimethyl oxide, phorone, cyclohexanone and diacetone alcohol. The amount of solvent is preferably 50 to 99% by weight, and more preferably 80 to 99% by weight, based on the total weight of the reaction solution. When the amount of solvent is in the preferred range described above, water permeability of the resulting composite semipermeable membrane can be kept high, and at the same time, defects are unlikely to occur.

The contact of the microporous support membrane with the reaction solution is preferably carried out uniformly and continuously on the microporous support membrane. Specific examples thereof include the method of coating the microporous support membrane with the reaction solution using a coating applicator such as a spin coater, a wire bar, a flow coater, a die coater, a roll coater or a sprayer. Another example is the method of immersing the microporous support membrane in the reaction solution.

When the microporous support membrane is immersed in the reaction solution, the contact time of the microporous support membrane with the reaction solution is preferably in the range of 0.5 to 10 minutes and more preferably in the range of 1 to 3 minutes. After the reaction solution has been brought into contact with the microporous support membrane, it is preferable to drain the solution sufficiently so that droplets would not remain on the membrane. Sufficient draining prevents degradation of membrane performance due to the membrane defects resulting from the part where the droplets remained after membrane formation. Examples of the method of draining the solution that can be used include holding vertically the microporous support membrane after the contact with the reaction solution to subject the excess reaction solution to gravity flow, blowing air such as nitrogen from an air nozzle to compulsorily drain the solution and the like. After the draining, the membrane surface can also be dried to remove a portion of the solvent in the reaction solution.

The step of condensing hydrolyzable groups of Compounds is performed by heat treatment after the contact of the reaction solution on the microporous support membrane. The heating temperature in this step is required to be lower than the temperature that melts the microporous support membrane and degrades the performance as a separation membrane. In order that the condensation reaction proceeds rapidly, in general, heating is preferably carried out at 0°C or higher and more preferably 20°C or higher. Further, the reaction temperature is preferably not higher than 150°C and more preferably not higher than 120°C. When the reaction temperature is 0°C or higher, the hydrolysis and the condensation reaction proceed rapidly, and when not higher than 150°C, the hydrolysis and the condensation reaction can be readily controlled. Further, by adding a catalyst that promotes hydrolysis or condensation, the reaction can proceed even at a lower temperature. Furthermore, in the present invention, heating conditions and humidity conditions are selected such that the separation functional layer will have pores so as to carry out the condensation reaction appropriately.

As a method of promoting polymerization of ethylenically unsaturated groups of Compound (A) and Compound (B), heat treatment, electromagnetic wave irradiation, electron beam irradiation and plasma irradiation can be employed. The electromagnetic wave herein includes infrared ray, ultraviolet ray, X-ray, gamma-ray and the like. Although the optimal method may be selected as appropriate, promoting the polymerization by electromagnetic wave irradiation is preferred in terms of, for example, running costs and productivity. Among the electromagnetic waves, infrared ray irradiation and UV irradiation are more preferred in terms of convenience. When the polymerization is promoted using infrared rays or ultraviolet rays, these light sources need not selectively emit only the light in these wavelength regions and need only include the electromagnetic waves in these wavelength regions. However, in terms of ease of, for example, shortening of polymerization time and control of polymerization conditions, the intensity of these electromagnetic waves is preferably higher than that of electromagnetic waves in other wavelength regions.

The electromagnetic waves can be generated from a halogen lamp, a xenon lamp, a UV lamp, an excimer lamp, a metal halide lamp, a noble gas fluorescent lamp, a mercury lamp and the like. Although the energy of the electromagnetic waves is not particularly restricted as long as polymerization can be carried out, in particular, high-efficiency and low-wavelength ultraviolet rays have high thin membrane-forming properties. Such ultraviolet rays can be generated by a low-pressure mercury lamp and an excimer laser lamp. The thickness and form of the separation functional layer according to the present invention can vary significantly depending on each polymerization condition and can vary significantly depending on the wavelength and intensity of electromagnetic waves, the distance to an object to be irradiated, and the processing time in the case of polymerization using electromagnetic waves. Accordingly, these conditions need to be optimized as appropriate.

For the purpose of increasing the polymerization rate, it is preferable to add a polymerization initiator, a polymerization accelerator and the like when forming a separation functional layer. The polymerization initiator and the polymerization accelerator are not particularly limited and appropriately selected depending, for example, on the structure of the compound used and the polymerization method.

Examples of the polymerization initiator are given below. Examples of initiators for polymerization using electromagnetic waves include benzoin ether, dialkyl benzyl ketal, dialkoxyacetophenone, acylphosphine oxide or bisacylphosphine oxide, $\alpha$- diketones (e.g., 9, 10- phenanthrenequinone), diacetylquinone, furylquinone, anisylquinone, 4, 4'-dichlorobenzylquinone and 4, 4'- dialkoxybenzylquinone and camphorquinone. Examples of initiators for polymerization using heat include azo compounds (e.g., 2, 2'- azobis (isobutyronitrile) (AIBN) or azobis- (4- cyanovalerianic acid) ), peroxides (e.g., dibenzoyl peroxide, dilauroyl peroxide, *tert*- butyl peroctoate, *tert*- butyl perbenzoate, or di- *(tert*- butyl) peroxide), further, aromatic diazonium salts, bis- sulfonium salts, aromatic iodonium salts, aromatic sulfonium salts, potassium persulfate, ammonium persulfate, alkyl lithium, cumyl potassium, sodium naphthalene and distyryl dianion. In particular, benzopinacol and 2, 2'- dialkylbenzopinacol are particularly preferred as an initiator for radical polymerization.

Peroxides and $\alpha$- diketones are preferably used in combination with an aromatic amine in order to accelerate the initiation. These combinations are also called redox system. Examples of such a system include the combination of benzoyl peroxide or camphorquinone with an amine (e.g., N, N- dimethyl- p- toluidine, N, N- dihydroxyethyl- p- toluidine, *p*- dimethyl- ethyl aminobenzoate ester, or a derivative thereof) . In addition, a system that contains peroxide in combination with ascorbic acid, barbiturate or sulfinic acid, which acts as a reducing agent, is also preferred.

Then, a polycondensation reaction occurs upon heat treatment of this at about 100 to 200°C for about 10 minutes to 3 hours, and a composite semipermeable membrane of the present invention comprising a separation functional layer formed on the microporous support membrane surface can be obtained, which is preferred. Although the heating temperature depends on the material of the microporous support membrane, when it is in the preferred range described above, the functional layer does not dissolve out because the polycondensation reaction occurs sufficiently, and a rejection rate will be kept high; at the same time, water- producing capacity of the composite semipermeable membrane will be kept high because pore blockage of the microporous support membrane due to dissolution does not occur.

In the production method described above, the step of polymerizing ethylenically unsaturated groups may be performed before or after the step of polycondensation of hydrolyzable groups. Alternatively, the polycondensation reaction and the polymerization reaction may be performed at the same time.

Although the composite semipermeable membrane thus obtained can be used as it is, it is preferable to hydrophilize the surface of the membrane before use, for example, with an alcohol-containing aqueous solution or an aqueous alkaline solution.

EXAMPLES

The present invention will now be described more specifically by way of example. However, the present invention is not limited thereto.

In Examples below, an initial performance of salt rejection rate of a composite semipermeable membrane, an initial performance of flux of a composite semipermeable membrane and a performance retention rate after immersion in chlorine are calculated by the following equation (V), the following equation (VI) and the following equation (VII), respectively.

$$\text{Rejection rate (\%)} = \{(\text{Concentration of feed liquid - Concentration of permeate liquid})/\text{Concentration of feed liquid}\} \times 100 \quad (V)$$

$$\text{Flux (m}^3\text{/m}^2\text{/day)} = (\text{Permeate liquid amount per day})/(\text{Membrane area}) \quad (VI)$$

$$\text{Performance retention rate after immersion in chlorine (\%)} = (\text{Rejection rate after immersion in chlorine})/(\text{Rejection rate before immersion in chlorine}) \times 100$$

$$(VII)$$

(Example 1)

On a polyester non-woven fabric, a solution of 15.7% by weight of polysulfone in dimethylformamide was cast to a thickness of 200 μm at room temperature (25°C), and the resultant was immediately immersed in pure water and left to stand for 5 minutes to thereby produce a microporous support membrane.

The microporous support membrane obtained is brought into contact for 1 minute with a solution obtained by dissolving 46 mM of Compound (A) 3- acryloxypropyltrimethoxysilane (Q value = 0.92), 70 mM of Compound (B) sodium 4- vinylphenylsulfonate (Q value = 2.49), 43 mM of Compound (C) p- styrylethyltrimethoxysilane (Q value = 1.50) and 8.3 mM of 2, 2- dimethoxy- 2- phenylacetophenone in a 65% aqueous isopropyl alcohol solution, and nitrogen was blown from an air nozzle to remove excess solution from the support membrane surface, thereby forming a layer of the solution described above on the microporous support membrane. Compound (A), Compound (B), Compound (C) and other compounds contained in the solution described above are shown in Table 2. Then, using a UV irradiation device TOSCURE (registered trademark) 752 manufactured by HARISON TOSHIBA LIGHTING Corporation that is capable of radiating ultraviolet rays having a wavelength of 365 nm, the radiation intensity was set at 20 mW/cm$^2$, and ultraviolet rays were radiated for 10 minutes to produce a composite semipermeable membrane in which a separation functional layer made from 3- acryloxypropyltrimethoxysilane, sodium 4- vinylphenylsulfonate and p- styrylethyltrimethoxysilane was formed on a microporous support membrane surface.

Then, the composite semipermeable membrane obtained was retained in a hot- air dryer at 120°C for 3 hours to condense a silane coupling agent, thereby obtaining a dry composite semipermeable membrane having a separation functional layer on a microporous support membrane. Thereafter, the dry composite semipermeable membrane was immersed in an aqueous solution of 10% by weight of isopropyl alcohol for 10 minutes for hydrophilization. To the composite semipermeable membrane thus obtained, 500- ppm saline whose pH was adjusted to be 6.5 was supplied under the conditions of 0.75 MPa and 25°C to perform a pressure membrane filtration operation, and the water quality of permeate water and feed water was measured to thereby obtain the results shown in Table 3.

Further, the composite semipermeable membrane obtained was immersed in a 500- ppm aqueous chlorine solution whose pH was adjusted to be 7 for one week to perform a chlorine resistance test. The performance retention rate after immersion in the aqueous chlorine solution is also shown in Table 3.

[Table 2]

|  | Compound (A) | Compound (B) | Compound (C) | Other compound |
|---|---|---|---|---|
| Example 1 | 3-acryloxypropyltrimethoxysilane | sodium 4-vinylphenylsulfonate | p-styrylethyltrimethoxysilane | 2,2-dimethoxy-2-phenyl acetophenone |
| Example 2 | 3-methacryloxypropyltrimethoxysilane | sodium 4-vinylphenylsulfonate | p-styrylethyltrimethoxysilane | 2,2-dimethoxy-2-phenyl acetophenone |
| Example 3 | 3-acryloxymethyltrimethoxysilane | sodium 4-vinylphenylsulfonate | p-styrylethyltrimethoxysilane | 2,2-dimethoxy-2-phenyl acetophenone |
| Example 4 | 1-allyl-3-(3-trimethoxysilylpropyl) imidazolium chloride | sodium 4-vinylphenylsulfonate | 3-acryloxypropyltrimethoxysilane | 2,2-dimethoxy-2-phenyl acetophenone |
| Example 5 | 3-acryloxypropyltrimethoxysilane | vinylbenzoic acid | p-styrylethyltrimethoxysilane | 2,2-dimethoxy-2-phenyl acetophenone |
| Example 6 | 3-acryloxypropyltrimethoxysilane | acrylic acid | 3-methacryloxypropyltrimethoxysilane | 2,2-dimethoxy-2-phenyl acetophenone |
| Example 7 | 3-acryloxypropyltrimethoxysilane | sodium 4-vinylphenylsulfonate | p-styrylethyltrimethoxysilane | 2,2-dimethoxy-2-phenyl acetophenone, tetramethoxysilane |
| Example 8 | 3-acryloxypropyltrimethoxysilane | sodium 4-vinylphenylsulfonate | 1,3,5-triacryloylhexahydro-1,3,5-triazine | 2,2-dimethoxy-2-phenyl acetophenone |
| Comparative Example 1 | - | - | - | - |
| Comparative Example 2 | 1-allyl-3-(3-trimethoxysilylpropyl) imidazolium chloride | sodium 4-vinylphenylsulfonate | - | 2,2-dimethoxy-2-phenyl acetophenone |
| Comparative Example 3 | 3-acryloxypropyltrimethoxysilane | sodium 4-vinylphenylsulfonate | - | 2,2-dimethoxy-2-phenyl acetophenone |
| Comparative Example 4 | 3-acryloxypropyltrimethoxysilane | vinylbenzoic acid | - | 2,2-dimethoxy-2-phenyl acetophenone |
| Comparative Example 5 | 3-acryloxypropyltrimethoxysilane | acrylic acid | - | 2,2-dimethoxy-2-phenyl acetophenone |
| Comparative Example 6 | 3-acryloxypropyltrimethoxysilane | sodium 4-vinylphenylsulfonate | - | 2,2-dimethoxy-2-phenyl acetophenone |

[Table 3]

| | Initial performance | | Performance retention rate after immersion in chlorine (%) |
|---|---|---|---|
| | Rejection rate (%) | Flux ($m^3/m^2$/day) | |
| Example 1 | 85 | 1.10 | 104 |
| Example 2 | 85 | 0.94 | 97 |
| Example 3 | 82 | 0.98 | 102 |
| Example 4 | 81 | 1.46 | 96 |
| Example 5 | 85 | 0.83 | 99 |
| Example 6 | 87 | 0.49 | 101 |
| Example 7 | 89 | 1.01 | 104 |
| Example 8 | 88 | 1.09 | 102 |
| Comparative Example 1 | 93 | 0.83 | 55 |
| Comparative Example 2 | 30 | 0.38 | - |
| Comparative Example 3 | 82 | 0.89 | 101 |
| Comparative Example 4 | 83 | 0.76 | 103 |
| Comparative Example 5 | 84 | 0.48 | 106 |
| Comparative Example 6 | 86 | 0.70 | 105 |

(Example 2)

A composite semipermeable membrane was produced in the same manner as in Example 1 except that 46 mM of 3-acryloxypropyltrimethoxysilane used in Example 1 was replaced with 43 mM of 3-methacryloxypropyltrimethoxysilane (Q value = 1.08). Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 3)

A composite semipermeable membrane was produced in the same manner as in Example 1 except that 46 mM of 3-acryloxypropyltrimethoxysilane used in Example 1 was replaced with 52 mM of 3-acryloxymethyltrimethoxysilane (Q value = 0.86). Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 4)

A composite semipermeable membrane was produced in the same manner as in Example 1 except that 46 mM of 3- acryloxypropyltrimethoxysilane, 43 mM of *p*- styrylethyltrimethoxysilane and 70 mM of sodium 4- vinylphenylsulfonate used in Example 1 were replaced with 53 mM of 1- allyl- 3- (3- trimethoxysilylpropyl) imidazolium chloride (Q value = 0.28), 35 mM of 3- acryloxymethyltrimethoxysilane and 104 mM of sodium 4- vinylphenylsulfonate, respectively; further, a UV irradiation device was changed from the UV irradiation device TOSCURE (registered trademark) 752 manufactured by HARISON TOSHIBA LIGHTING Corporation to an excimer lamp (UER20- 172) manufactured by USHIO INC. that is capable of radiating ultraviolet rays having a wavelength of 172 nm; the irradiation distance was changed to 1 cm; and the irradiation time was changed to 10 minutes. Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 5)

A composite semipenneable membrane was produced in the same manner as in Example 1 except that 70 mM of sodium 4-vinylphenylsulfonate used in Example 1 was replaced with 60 mM of vinylbenzoic acid (Q value = 5.17); further, the radiation intensity was changed from 20 mW/cm$^2$ to 40 mW/cm$^2$; and the irradiation time was changed from 10 minutes to 5 minutes. Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 6)

A composite semipermeable membrane was produced in the same manner as in Example 1 except that 70 mM of sodium 4-vinylphenylsulfonate used in Example 1 was replaced with 99 mM of acrylic acid (Q value = 0.83); 42 mM of Compound (C) p-styrylethyltrimethoxysilane was replaced with 43 mM of 3-methacryloxypropyltrimethoxysilane; further, the radiation intensity was changed from 20 mW/cm$^2$ to 30 mW/cm$^2$; and the irradiation time was changed from 10 minutes to 5 minutes. Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 7)

A composite semipermeable membrane was produced in the same manner as in Example 1 except that 10 mM of tetramethoxysilane coexists in the reaction solution used in Example 1. Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Example 8)

A composite semipermeable membrane was produced in the same manner as in Example 1 except that 46 mM of 3- acryloxypropyltrimethoxysilane, 70 mM of sodium 4- vinylphenylsulfonate and 42 mM of p- styrylethyltrimethoxysilane used in Example 1 were replaced with 94 mM of 3- acryloxypropyltrimethoxysilane, 66 mM of sodium 4- vinylphenylsulfonate and 20 mM of 1, 3, 5- triacryloylhexahydro- 1, 3, 5- triazine, respectively. Compound (A), Compound (B), Compound (C) and other compounds contained in a solution are shown in Table 2. The evaluation of the composite semipermeable membrane obtained was carried out in the same manner as in Example 1 to obtain the results shown in Table 3.

(Comparative Example 1)

To the same microporous support membrane as in Example 1, an aqueous solution containing 3.0% by weight of m-phenylenediamine and 0.5% by weight of sodium bisulfite were applied, and dried with hot air at 70°C for 1 minute. Thereafter, an n-decane solution containing 0.4% by weight of isophthalic acid chloride and 0.1 % by weight trimesic acid chloride was applied and treated with hot air at 100°C for 5 minutes. Thereafter, the resultant was further immersed in a 100-ppm aqueous chlorine solution whose pH was adjusted to be 7 for 2 minutes, and then washed with pure water. As a result, a composite semipermeable membrane provided with a separation functional layer comprising polyamide was obtained. The evaluation of the composite semipermeable membrane obtained was carried out in the same manner as in Example 1 to obtain the results shown in Table 3.

It can be seen from Table 3 that the performance retention rate after immersion in an aqueous chlorine solution of the composite semipermeable membrane obtained in Comparative Example 1 is significantly reduced, whereas the composite semipermeable membranes obtained in Example 1 to 7 maintain a performance equivalent to that before immersion even after immersion in an aqueous chlorine solution.

(Comparative Example 2)

A composite semipermeable membrane was produced in the same manner as in Example 4 except that, in the reaction solution in Example 4, Compound (C) 3- acryloxymethyltrimethoxysilane was not contained, and the concentration of Compound (A) 1- allyl- 3- (3- trimethoxysilylpropyl) imidazolium chloride was changed to 47 mM. Compound (A), Compound (B) and other compounds contained in a solution are shown in Table 2. The evaluation of the composite semipermeable membrane obtained was carried out in the same manner as in Example 1 to obtain the results shown in Table 3. For the initial performance of the composite semipermeable membrane obtained in Comparative Example 3, the salt rejection rate was significantly low compared to that of the composite semipermeable membrane obtained in Example 4.

(Comparative Example 3)

A composite semipermeable membrane was produced in the same manner as in Example 1 except that, in the reaction solution in Example 1, Compound (C) p-styrylethyltrimethoxysilane was not contained, and the concentration of 3-acryloxypropyltrimethoxysilane was changed to 90 mM. Compound (A), Compound (B) and other compounds contained in a solution are shown in Table 2. The evaluation of the composite semipermeable membrane obtained was carried out in the same manner as in Example 1 to obtain the results shown in Table 3. For the initial performance of the composite semipermeable membrane obtained in Comparative Example 2, the water permeability was low compared to that of the composite semipermeable membranes obtained in Examples 1 to 3 and 8.

(Comparative Example 4)

A composite semipermeable membrane was produced in the same manner as in Example 5 except that, in the reaction solution in Example 5, Compound (C) *p*-styrylethyltrimethoxysilane was not contained, and the concentration of Compound (A) 3-acryloxypropyltrimethoxysilane was changed to 90 mM. Compound (A), Compound (B) and other compounds contained in a solution are shown in Table 2. The evaluation of the composite semipermeable membrane obtained was carried out in the same manner as in Example 1 to obtain the results shown in Table 3. For the initial performance of the composite semipermeable membrane obtained in  Comparative Example 4, the salt rejection rate and water permeability were low compared to those of the composite semipermeable membrane obtained in Example 5.

(Comparative Example 5)

A composite semipermeable membrane was produced in the same manner as in Example 6 except that, in the reaction solution in Example 6, 3-methacryloxypropyltrimethoxysilane was not contained, and the concentration of 3-acryloxypropyltrimethoxysilane was changed to 90 mM. Compound (A), Compound (B) and other compounds contained in a solution are shown in Table 2. The evaluation of the composite semipermeable membrane obtained was carried out in the same manner as in Example 1 to obtain the results shown in Table 3. For the initial performance of the composite semipermeable membrane obtained in Comparative Example 5, the salt rejection rate was low compared to that of the composite semipermeable membrane obtained in Example 6.

(Comparative Example 6)

A composite semipermeable membrane was produced in the same manner as in Example 7 except that, in the reaction solution in Example 7, *p*-styrylethyltrimethoxysilane was not contained, and the concentration of 3-acryloxypropyltrimethoxysilane was changed to 90 mM. Compound (A), Compound (B) and other compounds contained in a solution are shown in Table 2. The evaluation of the composite semipermeable membrane obtained was carried out in the same manner as in Example 1 to obtain the results shown in Table 3. For the initial performance of the composite semipermeable membrane obtained in Comparative Example 6, the salt rejection rate and water permeability were low compared to those of the composite semipermeable membrane obtained in Example 7.

INDUSTRIAL APPLICABILITY

The composite semipermeable membrane of the present invention can be used in the field of treatment of water such as solid-liquid separation, liquid separation, filtration, purification, concentration, sludge treatment, seawater desalination, production of drinking water, production of pure water, reuse of waste water, volume reduction of waste water and recovery of valuables. As a result, a high-performance membrane is provided, and besides, improvements such as saving of energy and reduction in running costs can be expected.

**Claims**

1.  A composite semipermeable membrane comprising a microporous support membrane and a separation functional layer formed thereon, wherein the separation functional layer is formed from Compound (A) in which a reactive group(s) having an ethylenically unsaturated group and a hydrolyzable group(s) are bonded directly to a silicon atom, Compound (B) having an ethylenically unsaturated group, the Compound (B) being different from said Compound (A), and Compound (C) having an ethylenically unsaturated group, the Compound (C) being different from said Compounds (A) and (B), by condensation of hydrolyzable groups that the Compound (A) has and polymerization of ethylenically unsaturated groups that the Compound (A), the Compound (B) and the Compound (C) have, and the Compound (A), the Compound (B) and the Compound (C) satisfy the relationship of the following equation (I) regarding an Alfrey-Price Q value which is an index of copolymerizability of a monomer:

$$|Q_A - Q_C| + |Q_B - Q_C| = |Q_A - Q_B| \qquad \text{(I)}$$

(Qx represents an Alfrey-Price Q value of Compound X).

**2.** The composite semipermeable membrane according to claim 1, wherein the Compound (B) has an acidic group.

**3.** The composite semipermeable membrane according to claim 1 or claim 2, wherein the Compound (C) is a compound having an ethylenically unsaturated group, and the Compound (A) and the Compound (C) are both conjugated monomers or both unconjugated monomers.

**4.** The composite semipermeable membrane according to claim 1 or claim 2, wherein the Compound (C) is a compound in which an ethylenically unsaturated group(s) and a hydrolyzable group(s) are bonded directly to a silicon atom, the Compound (B) and the Compound (C) are both conjugated monomers or both unconjugated monomers.

**5.** The composite semipermeable membrane according to any one of claims 1 to 4, wherein the Compound (C) has a silicon atom, and a hydrolyzable group(s) is bonded directly to the silicon atom.

**6.** The composite semipermeable membrane according to any one of claims 1 to 5, wherein the Compound (A) is represented by the following chemical formula (i) :

$$\text{S1} (R^1)_m R^2)_n (R^3)_{4-m-n} \qquad \text{(i)}$$

($R^1$ represents a reactive group containing an ethylenically unsaturated group; $R^2$ represents alkoxy, alkenyloxy, carboxyl, ketoxime, a halogen atom or isocyanate; $R^3$ represents a hydrogen atom or alkyl; m and n are integers that satisfy $m + n \leq 4$, provided that $m \geq 1$ and $n \geq 1$ are satisfied; and in each of $R^1$, $R^2$ and $R^3$, when two or more functional groups are bonded to a silicon atom, the functional groups may be the same or different) .

**7.** The composite semipermeable membrane according to any one of claims 1 to 6, wherein the Compound (C) is represented by the following chemical formula (ii) :

$$\text{Si} (R^1)_m (R^2) n (R^3)_{4-m-n} \qquad \text{(ii)}$$

($R^1$ represents a reactive group containing an ethylenically unsaturated group; $R^2$ represents alkoxy, alkenyloxy, carboxyl, ketoxime, a halogen atom or isocyanate; $R^3$ represents a hydrogen atom or alkyl; m and n are integers that satisfy $m + n \leq 4$, provided that $m \geq 1$ and $n \geq 1$ are satisfied; and in each of $R^1$, $R^2$ and $R^3$, when two or more functional groups are bonded to a silicon atom, the functional groups may be the same or different) .

**8.** A process for producing a composite semipermeable membrane, comprising applying Compound (A) in which a reactive group(s) having an ethylenically unsaturated group and a hydrolyzable group(s) are bonded directly to a silicon atom, Compound (B) having an ethylenically unsaturated group, the Compound (B) being different from said Compound (A), and Compound (C) having an ethylenically unsaturated group, the Compound (C) being different from said Compounds (A) and (B) onto a microporous support membrane, and forming a separation functional layer by condensation of hydrolyzable groups that the Compound (A) has and polymerization of ethylenically unsaturated groups that the Compound (A), the Compound (B) and the Compound (C) have, wherein the Compound (A), the Compound (B) and the Compound (C) satisfy the relationship of the following equation (I):

$$|Q_A - Q_C| + |Q_B - Q_C| = |Q_A - Q_B| \qquad \text{(I)}$$

(Qx represents an Alfrey-Price Q value of Compound X).

EP 2 650 044 A1

<table>
<tr><td colspan="3" align="center"><b>INTERNATIONAL SEARCH REPORT</b></td><td>International application No.<br>PCT/JP2011/078037</td></tr>
</table>

A. CLASSIFICATION OF SUBJECT MATTER
*B01D69/12*(2006.01)i, *B01D71/26*(2006.01)i, *B01D71/70*(2006.01)i, *C08G77/442* (2006.01)i

According to International Patent Classification (IPC) or to both national classification and IPC

B. FIELDS SEARCHED

Minimum documentation searched (classification system followed by classification symbols)
B01D69/12, B01D71/26, B01D71/70, C08G77/442

Documentation searched other than minimum documentation to the extent that such documents are included in the fields searched
Jitsuyo Shinan Koho          1922–1996   Jitsuyo Shinan Toroku Koho    1996–2012
Kokai Jitsuyo Shinan Koho    1971–2012   Toroku Jitsuyo Shinan Koho    1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 07-155571 A  (Toray Industries, Inc.),<br>20 June 1995 (20.06.1995),<br>claims 1 to 7; paragraphs [0011] to [0016];<br>example 1<br>(Family: none) | 1-3,6,8<br>4,5,7 |
| X<br>A | JP 05-049879 A  (Kuraray Co., Ltd.),<br>02 March 1993 (02.03.1993),<br>claim 1; examples 1 to 4<br>(Family: none) | 1,3,6,8<br>2,4,5,7 |
| A | JP 2000-024471 A  (Daicel Chemical Industries, Ltd.),<br>25 January 2000 (25.01.2000),<br>claims 1, 2; paragraphs [0007] to [0038], [0043]; examples 1 to 5<br>(Family: none) | 1-8 |

[X] Further documents are listed in the continuation of Box C.    [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 February, 2012 (06.02.12)

Date of mailing of the international search report
14 February, 2012 (14.02.12)

Name and mailing address of the ISA/
Japanese Patent Office

Facsimile No.

Authorized officer

Telephone No.

Form PCT/ISA/210 (second sheet) (July 2009)

19

**INTERNATIONAL SEARCH REPORT**

| | International application No. |
|---|---|
| | PCT/JP2011/078037 |

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2010/029985 A1　(Toray Industries, Inc.),<br>18 March 2010 (18.03.2010),<br>entire text<br>& EP 2327469 A1 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3133132 A
- US 4277344 A
- JP 9099228 A
- JP 2000117077 A
- JP 2004017002 A
- WO 2010029985 A

### Non-patent literature cited in the description

- Polymer Handbook. John Wiley & Sons Inc, 1999, II/181-II/319
- M. FINEMAN et al. Journal of Polymer Science. John Wiley & Sons Inc, 1950, vol. 5, 269
- Revised Chemistry of Polymer Synthesis. Ohtsu Takayuki, Kagaku-Dojin Publishing Co., Inc, 1992, 111-116